# EUROPEAN PATENT APPLICATION

(11) **EP 2 040 361 A1**
(43) Date of publication of application: **25.03.2009**
(21) Application number: 07767586.6
(22) Date of filing: 26.06.2007
(51) Int. Cl.: H02M 3/00, H02J 7/34

(54) **POWER SUPPLY DEVICE**

(30) Priority: 10.07.2006 JP 2006188880
(71) Applicant: Panasonic Corporation, Kadoma-shi Osaka 571-8501 (JP)
(72) Inventor: HANDA, Hiroyuki, IPROC, IP Development Center, Chuo-ku, Osaka-shi, Osaka 540-6207 (JP); YOSHIDA, Koji, IPROC, IP Development Center, Chuo-ku, Osaka-shi, Osaka 540-6207 (JP)
(74) Representative: Schwabe - Sandmair - Marx
(86) International application number: PCT/JP2007/062780
(87) International publication number: WO 2008/007540

(57) **Abstract**

The power supply device contains a first auxiliary device and a first rectifier connected to a DC voltage source; a second auxiliary device that receives electric power via the first rectifier; a first DC/DC converter that uses the DC voltage source as an input source; an electricity storage device connected to an output terminal of the first DC/DC converter; and second DC/DC having an output terminal connected to the first rectifier, which uses the electricity storage device as an input source. When the DC voltage source has output voltage higher than a predetermined value, electric power is fed from the DC voltage source to the second auxiliary device and the electricity storage device is put on charge by the first DC/DC converter. When the output voltage gets lower than the predetermined value, the second DC/DC converter starts to operate, preventing decrease in voltage to be applied to the second auxiliary device.

## Description

### TECHNICAL FIELD

The present invention relates to a power supply device that compensates for decrease in voltage of a DC voltage source.

### BACKGROUND ART

In recent years, from the viewpoint of environmental protection, motor vehicle industries have introduced advanced vehicles, such as hybrid cars having a stop-idling function, on the market. In the stop-idling control, the engine temporarily makes a stop under a certain condition (i.e., stop-idling) and restarts automatically. However, upon the restart operation, a battery as a DC voltage source has decrease in voltage due to a large current flown in a starter. The decrease in voltage badly affects electronic equipment having a narrow permissible-range in input-voltage change, such as a car audio system, a navigation system, and an ECU (electronic control unit), causing them to malfunction or an abnormal stop. The inconveniency above has been not only a problem on vehicle control but also a nuisance to the user.

In other vehicles with no function of stop-idling, on-vehicle electric equipment as auxiliaries is making progress from hydraulic control to electric control for increasing gas mileage. For example, vehicles having assist equipment, such as electric power steering and electric brake control, are becoming available. The electric-driven auxiliaries are generally actuated on an as-needed basis, which brings about a state of large-current load of a pulse shape. Like the starter, this can also be a cause of decreasing battery voltage.

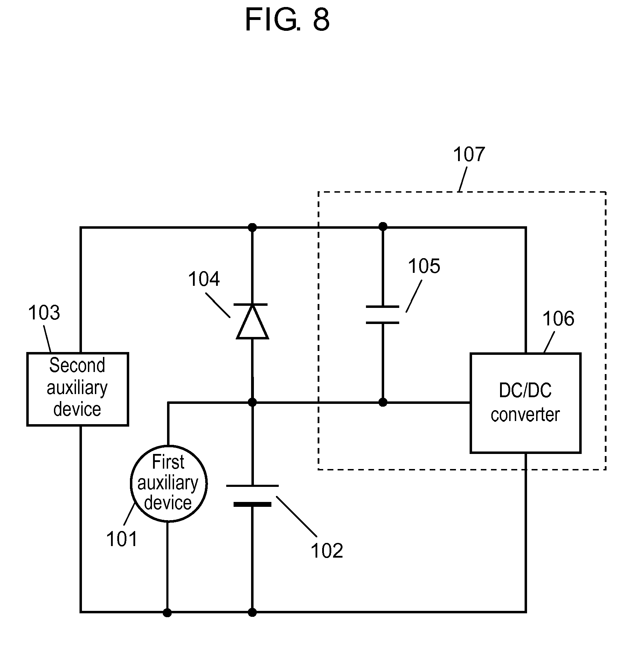

To address the problem, patent document 1 introduces a power supply device that compensates for an unwanted effect on an auxiliary device caused by decrease in battery voltage. Fig. 8 schematically shows the block diagram of the power supply device. First auxiliary device 101 is, for example, a starter that consumes instantaneous large current. DC voltage source 102 formed of a battery supplies first auxiliary device 101 with electric power. Second auxiliary device 103 is a device with a narrow permissible-range in input-voltage change, for example, an audio system, a navigation system, or an ECU (electronic control unit). Second auxiliary device 103 is fed from DC voltage source 102 via rectifier 104. Voltage compensation section 107 compensates for voltage drop when power is fed from DC voltage source 102 to second auxiliary device 103. Voltage compensation section 107 has energy storing source 105 and DC/DC converter 106. Energy storing source 105 is formed of an electricity storage device (for example, a capacitor) connected parallel with rectifier 104. DC voltage source 102 is the input source for DC/DC converter 106. Energy storing source 105 is connected to an output terminal of DC/DC converter 106.

Next will be described the workings of the power supply device structured above. Under the normal operation where the starter does not work, DC voltage source 102 maintains stability of voltage at around 12V since a large current does not flow into first auxiliary device 101. That is, electric power is fed with stability from DC voltage source 102 via rectifier 104 to second auxiliary device 103. However, when the starter works for restarting the engine on the completion of stop-idling, a large current flows into first auxiliary device 101. This decreases output voltage of DC voltage source 102 to around 7V while first auxiliary device 101 is operating. The level of the voltage at this moment is far below a lower limit (e.g. 11V) of permissible range of voltage for second auxiliary device 103.

To compensate for the decrease in voltage, voltage compensation section 107 starts to work. Specifically, when the voltage of DC voltage source 102 decreases below a predetermined value, DC/DC converter 106 starts charging operation on energy storing source 105 that has in-series connections with DC voltage source 102. As a result of the charging, the increase in voltage of energy storing source 105 compensates for the decrease in voltage of DC voltage source 102 and an increased amount of voltage is applied to second auxiliary device 103. The compensation allows second auxiliary device 103 to have stabilized voltage while first auxiliary device 101 is operating. The power supply device thus compensates for decrease in voltage of DC voltage source 102.

The conventional power supply device, as described above, has an improvement in that voltage compensation section 107 compensates for decrease in voltage of DC voltage source 102 so as to maintain stability of power supply to second auxiliary device 103. However, when a large-capacity device (i.e., energy storing source 105 here) is disposed at a section connected in series to DC voltage source 102 where stability is needed, the device requires a supply of an instantaneous large current for increasing response speed. The current supply has to be provided from DC/DC converter 106 as a power supplier. That is, the rated current of DC/DC converter 106 has to be larger than the current consumed by second auxiliary device 103.

The voltage of DC voltage source 102 decreases as a large current is flown into first auxiliary device 101 from DC voltage source 102. At the same time, DC voltage source 102 supplies DC/DC converter 106 with current for stabilizing voltage of second auxiliary device 103. This causes a momentary increase in burden of electricity on DC voltage source 102. As a result, the voltage to be applied to first auxiliary device 101 including a starter has lost stability even though the voltage to be applied to second auxiliary device 103 can be stabilized.

In addition, the conventional structure-where energy storing source 105 is disposed on the power supply line to second auxiliary device 103-has caused a delay in speed of response to compensation of the voltage decrease.

Patent document 1: Japanese Unexamined Patent Application Publication No. 2005-204421

### SUMMARY OF THE INVENTION

The power supply device of the present invention has a DC voltage source; a first auxiliary device connected parallel to the DC voltage source; a first rectifier connected to the DC voltage source; a second auxiliary device that receives electric power via the first rectifier; a first DC/DC converter that uses the DC voltage source as an input source; a large-capacity electricity storage device connected to an output terminal of the first DC/DC converter; and second DC/DC converter having an output terminal connected to the first rectifier, which uses the electricity storage device as an input source.

In such structured power supply device, the DC voltage source carries voltage higher than a predetermined value under the condition where the generator connected to the DC voltage source is in operation led by engine start-up. That is, in the condition of high voltage, the DC voltage source supplies the second auxiliary device with electric power via the first rectifier, and at the same time, first DC/DC converter puts the electricity storage device on charge with the use of the DC voltage source as an input source.

Now suppose that a vehicle having the power supply device above comes to a stop after predetermined conditions are satisfied and goes into the stop-idling mode. On completion of the stop-idling by releasing the brake, as the engine starts up, a large current flows into the starter as the first auxiliary device from the DC voltage source, by which the DC voltage source has a momentary drop in voltage. However, according to the structure of the present invention, second DC/DC converter uses the electricity storage device as an input source-that has been charged by the first DC/DC converter in advance-and then outputs voltage to both ends of the first rectifier for compensation of a decreased amount of battery voltage.

As another aspect of the present invention, the power supply device has a DC voltage source; a wide voltage-range auxiliary device connected in parallel to the DC voltage source; a parallel circuit, which is formed of an electricity storage device and a first rectifier, connected in series to the DC voltage source; a high voltage auxiliary device that is connected in parallel to an in-series circuit of the DC voltage source and the electricity storage device and requires voltage higher than that of the DC voltage source; a second rectifier connected to the DC voltage source; a narrow voltage-range auxiliary device connected in parallel to the DC voltage source via the second rectifier; and a bidirectional DC/DC converter of which a first input/output terminal is connected to the narrow voltage-range auxiliary device and a second input/output terminal is connected to the parallel circuit of the electricity storage device and the first rectifier.

With the structure above, the bidirectional DC/DC converter puts the electricity storage device on charge. A total value of voltage of the DC voltage source and voltage of the electricity storage device is applied to the high voltage auxiliary device. When the DC voltage source has a voltage drop as a large current flows into the high voltage auxiliary device , the bidirectional DC/DC converter receives power from the electricity storage device and outputs it to the narrow voltage-range auxiliary device, thereby compensating for decrease in voltage to be applied to the narrow voltage-range auxiliary device. In this way, using the power charged in the electricity storage device, the structure, too, compensates for decrease in voltage.

As still another aspect of the present invention, the power supply device has a DC voltage source; a high voltage auxiliary device connected in parallel to the DC voltage source; a generator connected in parallel to the DC voltage source; a wide voltage-range auxiliary device connected in parallel to the DC voltage source; a parallel circuit, which is formed of a rectifier and a switch element, connected at one end of the circuit in series to the DC voltage source; a narrow voltage-range auxiliary device connected to the other end of the parallel circuit of the rectifier and the electricity storage device; and bidirectional DC/DC converter of which a first input/output terminal is connected to the narrow voltage-range auxiliary device; and an electricity storage device connected to a second input/output terminal of the bidirectional DC/DC converter.

With the structure above, the bidirectional DC/DC converter puts the electricity storage device on charge with the use of electric power generated by the generator mainly in the braking operation of the vehicle. In a case where power generation by the generator is not expected, specifically, when the vehicle is in stop-idling or in acceleration, the bidirectional DC/DC converter discharges the electric power stored in the electricity storage device to the auxiliary device, by which the auxiliary device has electric power supply. In this way, using the power charged in the electricity storage device, the structure, too, compensates for decrease in voltage.

According to the structure, maintaining the switch element OFF allows the circuit to prevent reverse connection. If the DC voltage source is connected reverse in polarity, the rectifier prevents current that flows in an opposite direction. When the engine restarts after stop-idling, the high voltage auxiliary device has a large current beyond the supply current from the bidirectional DC/DC converter. At that time, at least maintaining the switch element OFF compensates for decrease in voltage of the DC voltage source caused by the large-current-flow into the high voltage auxiliary device, and accordingly, compensates for decrease in voltage to be applied to the narrow voltage-range auxiliary device.

When the electricity storage device is in the process of charging, or when the electricity storage device supplies the narrow voltage-range auxiliary device with electric power while the high voltage auxiliary device as a large-current consumer is not working, the switch element is maintained ON. The switching control decreases power loss caused by current flown into the rectifier.

### BRIEF DESCRIPTION OF THE DRAWINGS

Fig. 1 schematically shows a block diagram of the power supply device in accordance with a first exemplary embodiment of the present invention.
Fig. 2 shows a detailed block diagram of the second DC/DC converter in accordance with the first exemplary embodiment.
Fig. 3 schematically shows a block diagram of another structure of the power supply device in accordance with the first exemplary embodiment.
Fig. 4 schematically shows a block diagram of a structure having a linear regulator of the power supply device in accordance with the first exemplary embodiment.
Fig. 5 schematically shows a block diagram of the power supply device in accordance with a second exemplary embodiment of the present invention.
Fig. 6 schematically shows a block diagram of another structure of the power supply device in accordance with the second exemplary embodiment.
Fig. 7 schematically shows a block diagram of the power supply device in accordance with a third exemplary embodiment of the present invention.
Fig. 8 schematically shows a block diagram of a conventional power supply device.

### REFERENCE MARKS IN THE DRAWINGS

- 1: first auxiliary device
- 2: DC voltage source
- 3: second auxiliary device
- 4: first rectifier
- 6: first DC/DC converter
- 8: electricity storage device
- 9: second DC/DC converter
- 17, 23: second rectifier
- 19: linear regulator
- 20: wide voltage-range auxiliary device
- 22: high voltage auxiliary device
- 24: narrow voltage-range auxiliary device
- 26: bidirectional DC/DC converter
- 26a: first input/output terminal
- 26b: second input/output terminal
- 28: isolated bidirectional DC/DC converter
- 31: rectifier
- 32: switch element

### DETAILED DESCRIPTION OF THE PREFERRED EMBODIMENTS

The exemplary embodiments of the present invention are described hereinafter with reference to the accompanying drawings.

### (FIRST EXEMPLARY EMBODIMENT)

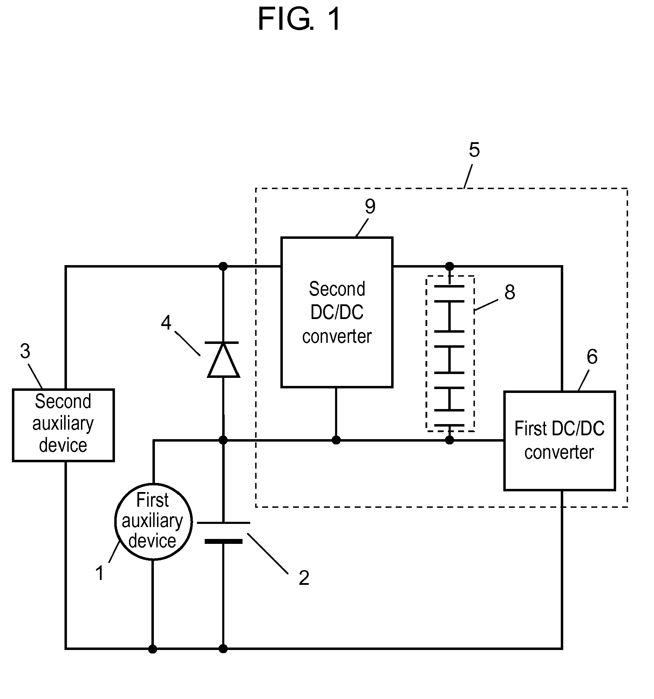

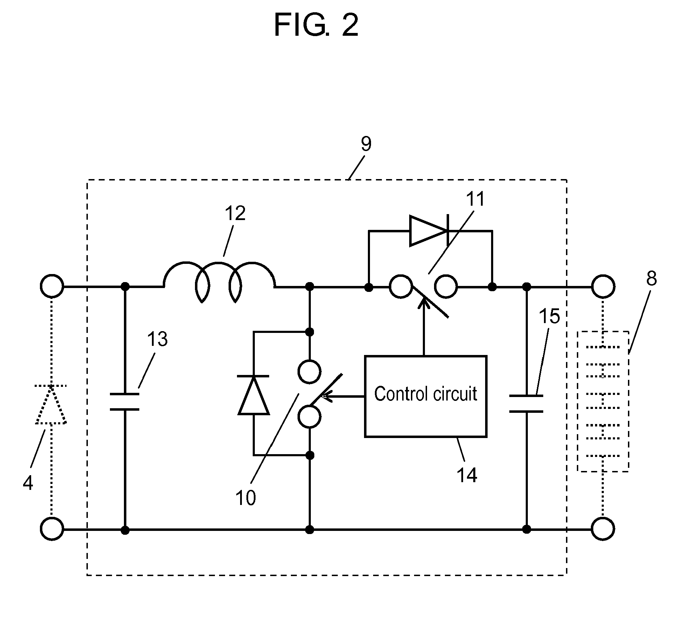

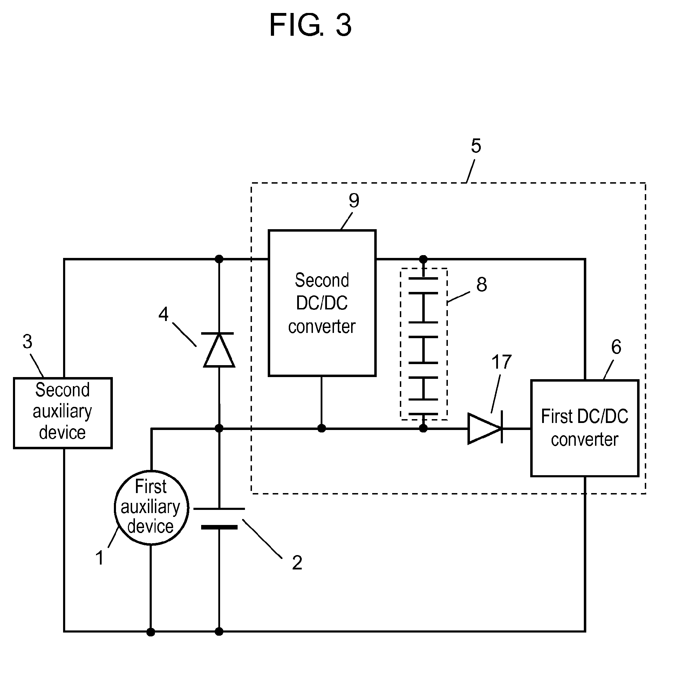

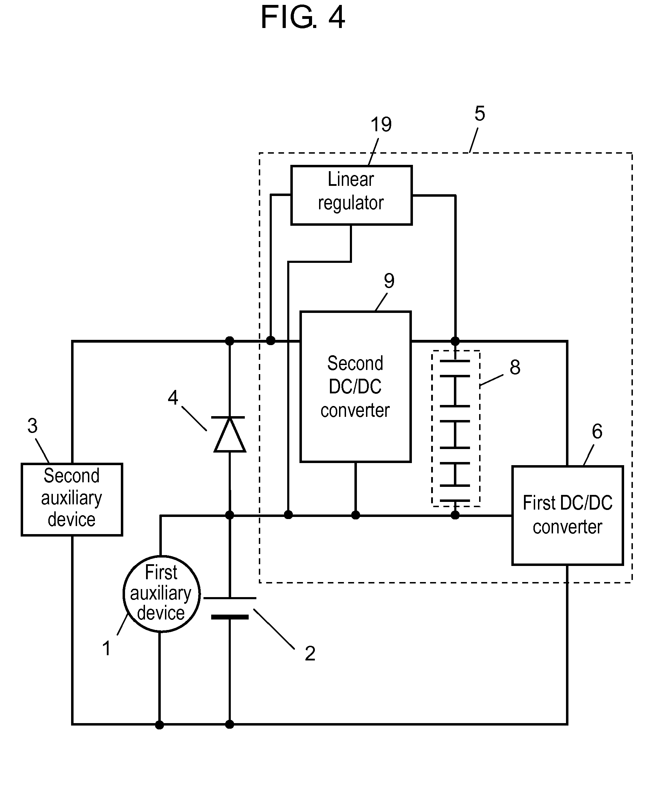

Fig. 1 schematically shows a block diagram of the power supply device in accordance with the first exemplary embodiment of the present invention. Fig. 2 shows a detailed block diagram of the second DC/DC converter in accordance with the embodiment. Fig. 3 schematically shows a block diagram of another structure of the power supply device in accordance with the embodiment. Fig. 4 schematically shows a block diagram of a structure having a linear regulator of the power supply device in accordance with the embodiment. In the embodiment, the description will be given on a vehicle having a stop-idling function.

In Fig. 1, first auxiliary device 1 is connected in parallel to DC voltage source 2. Devices employed for first auxiliary device 1 are the ones that carry a large current, such as a starter and a generator, or the ones that have a wide permissible-voltage-range or the ones that are insusceptible to a momentary stop of operations. As for DC voltage source 2, an electricity storage device with high power density, a lead battery is generally employed. Second auxiliary device 3 is connected to DC voltage source 2 via first rectifier 4. Devices employed for second auxiliary device 3 are the ones that have a narrow permissible-voltage-range, for example, a car audio system, a navigation system, and various types of electronic control unit (ECU). A malfunction or abnormal stop of the devices can be a nuisance to the user, and in the case of ECUs, it will invite critical condition on vehicle control.

Here will be described the structure of voltage compensation section 5 that compensates for decrease in voltage of DC voltage source 2. An input terminal of first DC/DC converter 6 is connected to DC voltage source 2; first DC/DC converter 6 uses DC voltage source 2 as an input source. As first DC/DC converter 6, for example, a non-isolated booster circuit or an isolated circuit is employed. An output terminal of first DC/DC converter 6 is connected to electricity storage device 8 that is formed of, for example, a plurality of electrical double-layer capacitors. Although an electrical-double-layer capacitor is preferably employed for an energy storage source in terms of its large capacitance and high reliability in charging and discharging repeatedly carried out, it is not limited thereto. A secondary battery or different types of capacitor can be employed for electricity storage device 8. Electricity storage device 8 is also connected to an input terminal of second DC/DC converter 9. First rectifier 4 is connected to an output terminal of second DC/DC converter 9.

Next will be described the detailed structure of second DC/DC converter 9 with reference to Fig. 2. As is shown in Fig. 2, first switch element 10 and second switch element 11 are connected in series to the input terminal to which electricity storage device 8 is connected. Inductance element 12 and smoothing capacitor 13 are connected in series so as to be parallel to first switch element 10. Smoothing capacitor 13 is disposed at the output terminal of second DC/DC converter and is connected to first rectifier 4. Control circuit 14 effects alternate ON/OFF control of first switch element 10 and second switch element 11. Control circuit 14 determines an ON/OFF ratio according to output voltage. Smoothing capacitor 15 is disposed at the input terminal of second DC/DC converter 9 and is connected to electricity storage device 8.

Second DC/DC converter 9 is preferably formed of a step-down circuit that changes the ratio of output current to input current according to the step-down ratio of voltage. The structure decreases the current flown into electricity storage device 8, contributing to high-speed response and downsized electricity storage device 8.

More preferably employed for second DC/DC converter 9 is a bidirectional converter circuit having a step-down synchronous rectification circuit from the following reasons. As starter current flows with the shape of pulse, DC voltage source 2 has abrupt decrease and increase in voltage. To cope with the decrease, second DC/DC converter 9 increases output. On the other hand, to cope with the abrupt increase, bidirectional connection of the converter allows electric power to return to electricity storage device 8. This provides voltage with stability at a high speed of response.

Next will be described the workings of the power supply device structured above.

When a vehicle with the stop-idling function comes to a stop after predetermined conditions are satisfied, the vehicle stops the engine. During the engine-stop period, since the generator is not working, the electric power needed to the vehicle is fed from DC voltage source 2.

Upon outputting a brake-release signal, the engine automatically restarts, which allows a large current (of approx. 500A) to flow from DC voltage source 2 to the starter of first auxiliary device 1. At this time, internal resistance of DC voltage source 2 causes voltage drop. For example, when a current of 500A flows through 12V-DC voltage source 2 having internal resistance value of 10 mΩ, voltage Vb measured across DC voltage source 2 is obtained by the following calculation: Vb = 12 - 500 x 0.01 = 7(V).

The voltage drop can cause malfunction or abnormal stop of a device with a narrow permissible-voltage-range. That is, it becomes necessary to apply input voltage that compensates for the voltage drop. According to the power supply device of the embodiment, while DC voltage source 2 is working with no voltage drop, i.e., under the condition where the output voltage is kept higher than a predetermined value (for example, 7V as described above), DC voltage source 2 supplies second auxiliary device 3 with electric power. At the same time, first DC/DC converter puts electricity storage device 8 on charge so as to compensate for one-time voltage drop at engine restart after stop-idling. Electricity storage device 8 undergoes charging during a charging period other than the engine-restart period, and the charging period is clearly longer than the engine-restart period. This contributes to decreased power-charging rate. Therefore, it becomes possible to make first DC/DC converter 6 smaller in size.

Electricity storage device 8 is put on charge so as to have a voltage value higher than the total of the maximum amount of decrease in voltage of DC voltage source 2 and the maximum amount of decrease in voltage of electricity storage device 8 that is calculated by multiplying the internal resistance value by maximum current of electricity storage device 8. The voltage value calculated above is adequately large for compensation for decrease in voltage of DC voltage source 2.

On completion of the charging operation on electricity storage device 8, first DC/DC converter 6 stops working. First DC/DC converter 6 remains OFF except when electricity storage device 8 is put on charge. The operation control not only reduces loss of first DC/DC converter 6 but also lightens the load on DC voltage source 2. Detecting the charging state of electricity storage device 8, the power supply device effects ON/OFF control of first DC/DC converter 6.

When the starter current required for restarting the engine flows out of DC voltage source 2 after the completion of the stop-idling state, the output voltage of DC voltage source 2 decreases below a predetermined value. At the same time, second DC/DC converter 9 starts up and generates output voltage across first rectifier 4 so as to compensate for the decrease in voltage of DC voltage source 2. That is, second DC/DC converter 9 effects control of application voltage to second auxiliary device 3, so that the voltage applied to second auxiliary device 3 remains stability without regard to voltage change in DC voltage source 2. According to the structure of the embodiment, the energy-storing source as a power supplier is electricity storage device 8, which serves as the input source of second DC/DC converter 9. Compared to a conventional structure where the energy-storing source is disposed in the output side, the structure of the embodiment offers a higher response. Besides, the output current of second DC/DC converter 9 is almost equivalent to the application voltage to second auxiliary device 3, decreasing the amount of electricity that the second DC/DC converter 9 carries. To be specific, electric power W2 that the second DC/DC converter 9 carries is calculated by the equation: W2 = Vd x I2 (where, Vd represents an amount of decrease in voltage of DC voltage source 2; I2 represents the current consumed by second auxiliary device 3). The amount of electric power W2 is almost covered by the electric power stored in electricity storage device 8. In a conventional structure, electric power is supplied to second auxiliary device 3 at the same time at which a large current flows into a starter as first auxiliary device 1 from DC voltage source 2. However, according to the structure of the embodiment, electricity storage device 8 supplies only second auxiliary device 3 with electric power, lightening the burden on the device and enhancing the reliability.

Although the start-up timing of second DC/DC converter 9 above is determined at which the output voltage of DC voltage source 2 decreases below a predetermined value, it is not limited thereto. As another possibility, second DC/DC converter 9 may start working upon receiving an external signal, for example, from the side of the vehicle. Receiving a signal earlier than the engine-restart operation allows second DC/DC converter 9 to have a quick start-up, providing output with stability.

The power supply device with the structure and workings above lightens the load on DC voltage source 2 and electricity storage device 8, increasing the response speed and providing second auxiliary device 3 with a stabilized voltage.

Fig. 3 schematically shows a block diagram of another structure of the power supply device, which is an improvement over the structure of Fig. 1. The structure of Fig. 3 differs from that of Fig. 1 in that second rectifier 17 is disposed at the input terminal of first DC/DC converter 6. Second rectifier 17 protects the circuit from damage caused by the current flow when DC voltage source 2 is connected reverse in polarity. In addition to the operation obtained by the structure of Fig. 1, disposing second rectifier 17 between electricity storage device 8 and the input terminal of first DC/DC converter 6 prevents the current flow in reverse connection, thereby enhancing reliability of the structure.

As another possibility, a switch element (not shown) may be disposed in parallel to second rectifier 17 in Fig. 3. When a vehicle-side ECU (not shown) remains the switch element ON at least during the charging operation on electricity storage device 8 by first DC/DC converter 6, the loss caused by the current flown into second rectifier 17 is decreased.

Fig. 4 schematically shows a block diagram of still another structure of the power supply device, which is an improvement over the structure of Fig. 1. In the structure of Fig. 3, linear regulator 19 is added to the structure of Fig. 1 so as to have input and output shared with second DC/DC converter 9. Specifically, as shown in Fig. 4, the input of linear regulator 19 is connected to the input of second DC/DC converter 9 and the output of linear regulator 19 is connected to the output of second DC/DC converter 9. In general, the response speed of linear regulator 19 is higher than that of a DC/DC converter. In a structure having a DC/DC converter only, a response delay can cause a decrease in voltage. However, adding linear regulator 19 to the structure above prevents the voltage decrease corresponding to the response delay, enhancing stability of application voltage to second auxiliary device 3.

In the structure above, the output voltage of linear regulator 19 has a value slightly lower than that of second DC/DC converter 9. By virtue of the setting, linear regulator 19 has no output automatically when the output of second DC/DC converter 9 comes up properly, which minimizes the loss of linear regulator 19 and lightens the load on electricity storage device 8.

With the structure and workings described above, the power supply device of the embodiment provides a stabilized voltage, with a high-speed response, to an auxiliary device, without increasing the load on the DC voltage source and the electricity storage device.

### (SECOND EXEMPLARY EMBODIMENT)

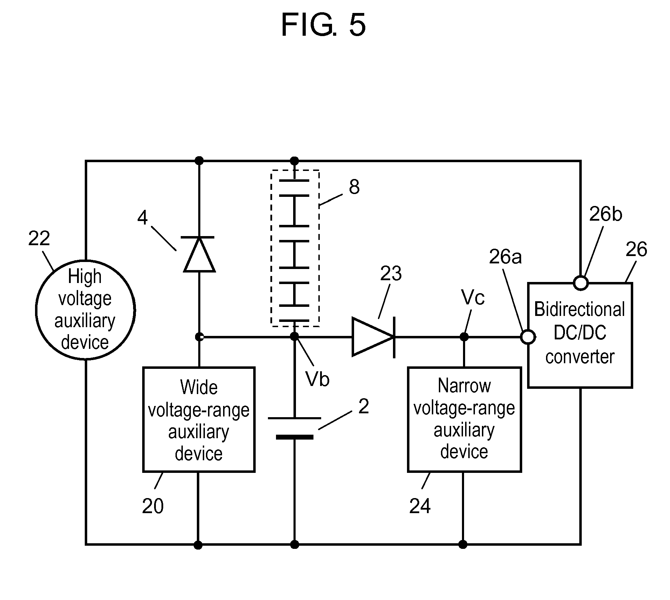

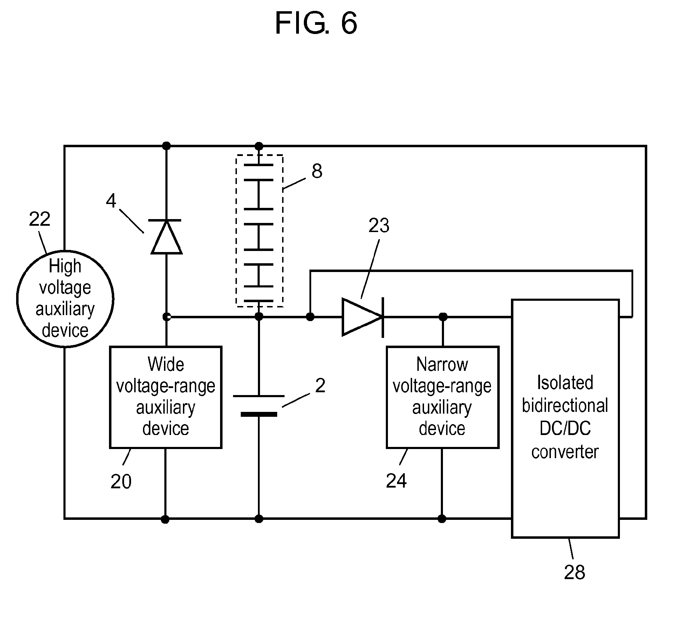

Fig. 5 schematically shows a block diagram of the power supply device in accordance with the second exemplary embodiment of the present invention. Fig. 6 schematically shows a block diagram of another structure of the power supply device of the embodiment. In Figs. 5 and 6, the same references are used as in Fig. 1 for similar parts. In addition to the stop-idling function, the structure of the embodiment forms a compensation circuit for voltage decrease in a power supply device system for vehicle employing an electrically operated auxiliary device.

In the structure of Fig. 5, electricity storage device 8 and first rectifier 4 form a parallel circuit, which is connected in series to DC voltage source 2. High voltage auxiliary device 22 is connected in parallel to the in-series circuit of DC voltage source 2 and the parallel circuit of electricity storage device 8 and first rectifier 4. Mainly employed for high voltage auxiliary device 22 are motor-driven devices, for example, electric power steering, electric brakes, an electric air-conditioner, and electric turbos. Applying voltage higher than that of DC voltage source 2 to these devices allows the motor to have higher torque, increasing in performance. Other than the aforementioned devices, a device that exhibits pulse-shaped consumption of electricity may be employed for high voltage auxiliary device 22.

Wide voltage-range auxiliary device 20 is connected in parallel to DC voltage source 2. The wording of "wide voltage-range" auxiliary device above represents an auxiliary device with a wide permissible-voltage range, which capable of operating normally even if the output voltage of DC voltage source 2 decreases to around 7V under the influence of high voltage auxiliary device 22 that consumes a large current in the form of pulse, such as a starter, or which has no ill effect on itself if the device unintentionally comes to a stop.

On the other hand, narrow voltage-range auxiliary device 24 is connected in parallel to DC voltage source 2 via second rectifier 23. In contrast to wide voltage-range auxiliary device 20, narrow voltage-range auxiliary device 24 includes a device with a narrow permissible-voltage-range, such as a car audio system, a navigation system, and a vehicle-side ECU. In these devices, coming to a stop in the middle of operation due to the voltage drop should never be allowed.

Narrow voltage-range auxiliary device 24 is connected to first input/output terminal 26a of bidirectional DC/DC converter 26. The parallel circuit of electricity storage device 8 and first rectifier 4 is connected to second input/output terminal 26b.

Next will be described the power supply device with the structure above.

When the ignition switch (not shown) of the vehicle is turned ON, the starter as high voltage auxiliary device 22 starts up. If the charge status of electricity storage device 8 is not sufficient at the first start-up, a reverse voltage can be applied to electricity storage device 8 when the starter has electrical connections. In the structure, however, first rectifier 4 prevents the application of the reverse voltage to electricity storage device 8. That is, when electricity storage device 8 is not charged sufficiently at the first start-up, the starter current flows through first rectifier 4.

Upon the engine start-up, a generator (not shown) connected to DC voltage source 2 generates electric power so as to put DC voltage source 2 on charge and provide wide voltage-range auxiliary device 20 and narrow voltage-range auxiliary device 24 with electric power. At that time, having DC voltage source 2 as input and electricity storage device 8 as output, bidirectional DC/DC converter 26 starts charging operation on electricity storage device 8. Electricity storage device 8 has to be charged to a voltage higher than the decreased voltage of DC voltage source 2 caused by a large current-flow into high voltage auxiliary device 22, or has to be a high-voltage state required for high voltage auxiliary device 22. This allows narrow voltage-range auxiliary device 24 to maintain compensation voltage higher than a predetermined value (for example, 11V) required for normal operation.

In the aforementioned operation where electricity storage device 8 comes into charging after engine start-up, the start-up of high voltage auxiliary device 22 has to wait for the completion of charging. To start up high voltage auxiliary device 22 in an early time, the following procedure may be taken. That is, prior to engine start-up, starting bidirectional DC/DC converter 26 up, with the use of a signal of a courtesy switch (not shown), for charging electricity storage device 8. In this case, first rectifier 4 may be removed from the structure.

Electricity storage device 8 is, as described earlier, formed of an electrical double-layer capacitor, which allows the charging voltage to be set to a desired value. The charging voltage can be controlled by bidirectional DC/DC converter 26. Furthermore, the total voltage of DC voltage source 2 and electricity storage device 8 can be controlled. In this case, high voltage auxiliary device 22 undergoes application of stabilized voltage with no dependence on change in voltage caused by a charging status or deterioration condition of DC voltage source 2.

With the structure above, it becomes possible to apply a voltage higher than that of DC voltage source 2 to high voltage auxiliary device 22. When a motor-driven device is employed for high voltage auxiliary device 22, high torque is expected. This allows the devices of the structure to operate on a higher efficiency.

Next will be described the engine-restart procedure (for example, start-up of the starter) after stop-idling.

Now suppose that DC voltage source 2 has a battery voltage of 12V and an internal resistance value of 10 mΩ. For example, when a current of 500A flows into the starter as high voltage auxiliary device 22 at engine-restart, as is described in the first embodiment, output voltage Vb of DC voltage source 2 measures approx. 7V that is lower than a predetermined value of 11V. In response to the voltage drop, bidirectional DC/DC converter 26 works as follows.

First, the operating state of bidirectional DC/DC converter 26 is changed before the starter start-up so as to have electricity storage device 8 as input and narrow voltage-range auxiliary device 24 as output. Besides, bidirectional DC/DC converter 26 maintains application voltage Vc at a level before engine-restart. With the control above, bidirectional DC/DC converter 26 can cope with the decrease in voltage Vb of DC voltage source 2 caused by the large-current flow at starter start-up and compensate for the voltage drop for applying voltage Vc to narrow voltage-range auxiliary device 24. Specifically, through the compensation, application voltage Vc to narrow voltage-range auxiliary device 24 is maintained at a predetermined value of 11V.

On completion of starter start-up, the generator starts up and the DC voltage source 2 regains the normal level in voltage and works under normal operating conditions. This allows second rectifier 23 to have electrical connections, by which electric power is supplied from DC voltage source 2 to narrow voltage-range auxiliary device 24.

The charged voltage of electricity storage device 8 is in a low state due to the current consumption by high voltage auxiliary device 22 and voltage compensation for narrow voltage-range auxiliary device 24. After that, i.e., when the normal operating conditions come back, electricity storage device 8 becomes recharged to a predetermined value by bidirectional DC/DC converter 26. Electricity storage device 8 has a similar voltage drop by high voltage auxiliary device 22 other than the starter. In this case, too, electricity storage device 8 undergoes a similar recharging operation.

Repeating the procedure above allows narrow voltage-range auxiliary device 24 to have stabilized voltage, even if high voltage auxiliary device 22 continually consumes a large current.

An electric auxiliary device using a motor generally consumes electric power as a large current-flow in a short period. In this case, electricity storage device 8 supplies electric power consumed in the short period, and the decreased amount of electric power can be covered by charging operation in other periods. This contributes to electric-power averaging, thereby downsizing bidirectional DC/DC converter 26.

Although the description of the embodiment is given on a structure having single bidirectional DC/DC converter 26, it is not limited thereto. The similar effect is expected with the use of two converters. However, employing bidirectional DC/DC converter 26 allows the structure to reduce in size and cost.

Fig. 6 schematically shows a block diagram of still another structure of the power supply device, which is an improvement over the structure of Fig. 5. The structure of Fig. 6 differs from that of Fig. 5 in using isolated bidirectional DC/DC converter 28, instead of a (non-isolated) bidirectional DC/DC converter. The output voltage of a non-isolated bidirectional DC/DC converter is calculated as a total of the voltage of DC voltage source 2 and the charged voltage of electricity storage device 8. In contrast, isolated bidirectional DC/DC converter 28 has an output the same as the charged voltage of electricity storage device 8, contributing to a decreased output power.

Next will be described the workings of the power supply device with the structure above. Basically, the structures of Figs. 5 and 6 similarly work and the description will be focused on differences between the two.

On completion of driving, if the ignition switch is turned OFF with the voltage of electricity storage device 8 maintained as high as rated voltage, deterioration of the electrical double-layer capacitor will be accelerated. Discharging electricity storage device 8 at the end of driving can prevent the deterioration. According to the structure of the second embodiment, the charged voltage of electricity storage device 8 is discharged to a predetermined voltage to improve energy efficiency through the following process.

In vehicle-mounted auxiliary devices, some devices having direct connection with DC voltage source 2 work at all times even under the engine-stop condition or don't work themselves but carry consumption current. For such devices, a slight amount of current (hereinafter, dark current) flows through the structure. The dark current exerts an influence on the battery life and the engine-start operation after a long period of no-use. In the structure of the embodiment, residual power of electricity storage device 8 is effectively used for the dark current.

To be specific, when detecting the engine-stop condition of the vehicle from an ignition-key signal, isolated bidirectional DC/DC converter 28 has electricity storage device 8 as input and narrow voltage-range auxiliary device 24 as output. When the output voltage of DC/DC converter 28 reaches a level higher than that of DC voltage source 2 but within the range of rated voltage of narrow voltage-range auxiliary device 24, isolated bidirectional DC/DC converter 28 stops working. At that time, narrow voltage-range auxiliary device 24 carries dark current only, so that the voltage applied to narrow voltage-range auxiliary device 24 gradually decreases from the output voltage of isolated bidirectional DC/DC converter 28 down to around voltage Vb of DC voltage source 2. The restart timing of isolated bidirectional DC/DC converter 28 may be set at the moment when voltage Vb is detected, or the moment on lapse of a timer-set suspended time. In this way, isolated bidirectional DC/DC converter 28 outputs the voltage of electricity storage device 8 in the engine-stop period so as to control it to be higher than that of DC voltage source 2. By virtue of the output control of converter 28, there is no dark-current flow from DC voltage source 2 as long as electricity storage device 8 maintains residual power. This lightens the load on DC voltage source 2, and at the same time, the residual power of electricity storage device 8 is effectively used for the dark current. Besides, the intermittent operation of isolated bidirectional DC/DC converter 28 allows electricity storage device 8 to supply narrow voltage-range auxiliary device 24 with dark current on a continual basis. As a result, the operation loss of isolated bidirectional DC/DC converter 28 is decreased. Through the operation above, the charged voltage of electricity storage device 8 is repeatedly discharged to a level that has no ill effect on its reliability (i.e., to a predetermined voltage).

The operation above is possible with the use of bidirectional DC/DC converter 26, as is shown in the structure of Fig. 5. In this case, however, DC voltage source 2 is included in the input of bidirectional DC/DC converter 26, by which an extra energy loss is increased at bidirectional DC/DC converter 26. In contrast, isolated bidirectional DC/DC converter 28 has input voltage from electricity storage device 8 only, decreasing energy loss. That is, the structure of Fig. 6 is more preferable than that of Fig. 5 in terms of effective use of energy.

As is described in the first exemplary embodiment, a switch element (not shown), for example, formed of an FET may be additionally disposed to each structure of Fig. 5 and Fig. 6. In this case, the switch element is connected in parallel with second rectifier 23 and is controlled by a vehicle-side ECU (not shown). Besides, the ECU effects control of the switch element in a manner so as to maintain OFF when bidirectional DC/DC converter 26 allows electricity storage device 8 to supply narrow voltage-range auxiliary device 24 with electric power and high voltage auxiliary device 22 is in operation. The aforementioned control is for compensation for voltage decrease of DC voltage source 24 affected by operating high voltage auxiliary device 22, thereby stabilizing power supply to narrow voltage-range auxiliary device 24, such as an audio system, a navigation system, and various types of ECU. Specifically, when bidirectional DC/DC converter 26 allows electricity storage device 8 to supply narrow voltage-range auxiliary device 24 with electric power, since the switch element maintains OFF, second rectifier 23 effectively prevents current from flowing to DC voltage source 2 and wide voltage-range auxiliary device 20 from electricity storage device 8, so that narrow voltage-range auxiliary device 24 keeps operating with stability. In addition, the switch element of FET that maintains OFF, too, in the out-of-use period of the vehicle, can be employed for the circuit that protects reverse connection of DC voltage source 2. When electricity storage device 8 is charged by electric power of DC voltage source 2, the switch element is turned ON. This is another advantage of reducing loss caused by current that flows into second rectifier 23.

When the power supply device above is employed for a vehicle having a regenerating function (that regenerates kinetic energy in the braking process as electric energy by a generator), the following effect is expected. In the regenerating process, the generator generates a large current more than 100A in a short period. However, the capacity of the battery as DC voltage source 2 is too small to have the whole amount of the current. In the regenerating process, putting electricity storage device 8 on charge by bidirectional DC/DC converter 26 increases the regeneration amount. During the charging process, however, second rectifier 23 has a voltage drop of about 1V, which develops a large electric-power loss in the form of heat. This arises a problem that second rectifier 23 has a radiator increased in size and weight. However, the structure having the switch element addresses the problem above. Maintaining the switch ON at least during the regenerating process allows the large current to flow in the switch element, reducing electric-power loss at second rectifier 23.

When the switch element is maintained ON while electricity storage device 8 is supplying narrow voltage-range auxiliary device 24 with electric power under the control of bidirectional DC/DC converter 26 and high voltage auxiliary device 22 is not operating, first input/output terminal 26a outputs electric power not only to narrow voltage-range auxiliary device 24 but also to DC voltage source 2. Therefore, when the power supply device employed for a vehicle having a regenerating function offers a preferable effect-the regeneration allows DC voltage source 2 to put on charge with the electric power stored in electricity storage device 8.

As described above, the structure of the embodiment provides a power supply device capable of stabilizing voltage with a high-speed response, but without placing a heavy load on the DC voltage source and the electricity storage device, and supplying the voltage to a predetermined auxiliary device.

### (THIRD EXEMPLARY EMBODIMENT)

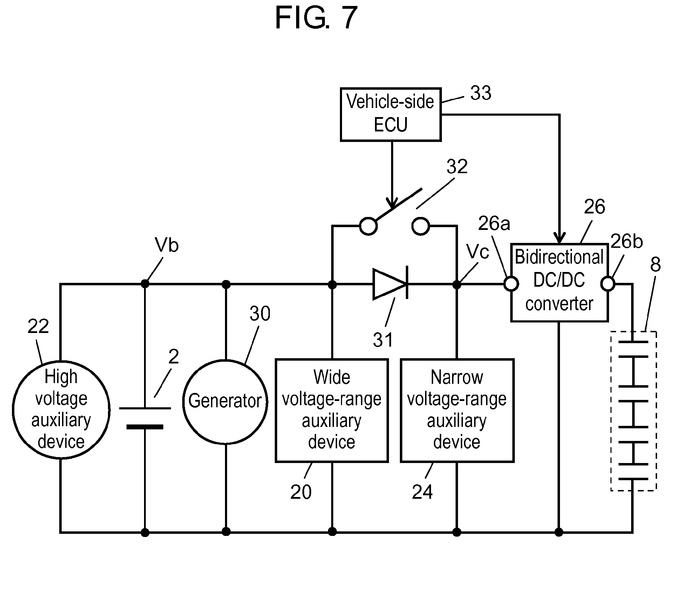

Fig. 7 schematically shows a block diagram of the power supply device in accordance with the third exemplary embodiment of the present invention. In Figs. 7, the same references are used as in Figs. 1 and 5 for similar parts and in-detail description thereof will be omitted. In addition to the stop-idling function, the structure of the embodiment forms a vehicle power supply device having a regenerating function described in the previous embodiment.

In the structure of Fig. 7, high voltage auxiliary device 22 and wide voltage-range auxiliary device 20 are connected in parallel circuit relation with DC voltage source 2. In addition, generator 30 for generating electric power by the engine is connected in parallel with the DC voltage source. A parallel circuit formed of rectifier 31 and switch element 32 is connected in series to DC voltage source 2. Switch element 32 is controlled by vehicle-side ECU 33. Although an FET is employed, like in the first and second exemplary embodiments, for the parallel circuit of rectifier 31 and switch element 32, it is not limited thereto. A similar effect is obtained from a structure where rectifier 31 is disposed independent from switch element 32 having a relay, for example.

At the other end of the parallel circuit of rectifier 31 and switch element 32, narrow voltage-range auxiliary device 24 is connected. Bidirectional DC/DC converter 26 makes connections to narrow voltage-range auxiliary device 24 at first input/output terminal 26a, and makes connections to electricity storage device 8 at second input/output terminal 26b.

Next will be described the power supply device having the structure above.

When the ignition switch (not shown) of the vehicle is turned ON, the engine starts up. Generator 30 starts to generate electric power, which is used for charging DC voltage source 2 and supplying to wide voltage-range auxiliary device 20 and narrow voltage-range auxiliary device 24. Receiving a signal from vehicle-side ECU 33, bidirectional DC/DC converter 26 starts pre-charge operation on electricity storage device 8, having first input/output terminal 26a as input and second input/output terminal 26b as output.

As is described in the second embodiment, the start-up of the charging operation on electricity storage device 8 may be set before the engine start-up in response to, for example, a signal of a courtesy switch (not shown).

When electricity storage device 8 is put on charge by DC voltage source 2 or generator 30, vehicle-side ECU 33 turns ON switch element 32. Maintaining switch element 32 ON allows the charging current to mainly flow in the switch element, thereby reducing power loss at rectifier 31.

Next will be described regenerative operation in braking of the vehicle.

Detecting a brake operation for braking the vehicle, vehicle-side ECU 33 turns ON switch element 32 and effects control of bidirectional DC/DC converter 26 in a manner so as to output electric power to electricity storage device 8. The electric power generated by generator 30 is charged to DC voltage source 2, and the power is also charged to electricity storage device 8 via bidirectional DC/DC converter 26. The amount of electric power generated in a short time in the braking period is beyond the capacity of DC voltage source 2 that is formed of a lead battery. Therefore, most of the generated power is supplied to electricity storage device 8. At that time, bidirectional DC/DC converter 26, which has already been in operation, quickly puts electricity storage device 8 on charge. At the same time, switch element 32 kept in the ON status reduces heavy loss in electric power at rectifier 31, as is described in the second embodiment. With the workings above, the structure effectively stores the regenerative power obtained in the regenerating process, with quick response and with a small loss of power.

Next will be described the engine-restart procedure (for example, start-up of the starter) after stop-idling.

The engine restart needs power supply from DC voltage source 2 to high voltage auxiliary device 22 (i.e., the starter). Due to the large current-flow in a short period, the voltage of DC voltage source 2 is plunged into a low level (around 7V) where narrow voltage-range auxiliary device 24 cannot keep working. To address the problem, vehicle-side ECU 33 operates as follows.

Just before starting up of the starter, vehicle-side ECU 33 turns OFF switch element 32 and effects control of bidirectional DC/DC converter 26 in a manner so as to have second input/output terminal 26b as input and first input/output terminal 26a as output. This allows the electric power stored in electricity storage device 8 to be stabilized by bidirectional DC/DC converter 26 and to be applied to narrow voltage-range auxiliary device 24. With the conditions above maintained, vehicle-side ECU 33 starts up the starter and restarts the engine. Although voltage Vb of DC voltage source 2 decreases to around 7V at that time, bidirectional DC/DC converter 26 maintains voltage Vc of the output terminal at adequate levels (more than 11V) for keep operating narrow voltage-range auxiliary device 24. That is, the anode-side voltage (i.e., voltage Vb) lowers than the cathode-side voltage (i.e., voltage Vc). Besides, switch element 32 is maintained OFF, and accordingly, rectifier 31 is out of operation. The electric power of electricity storage device 8 is supplied with stability to narrow voltage-range auxiliary device 24, without being supplied toward DC voltage source 2.

On completion of starter start-up, generator 30 starts up and DC voltage source 2 regains the normal level in voltage and works under normal operating conditions. At that time, vehicle-side ECU 33 turns ON switch element 32, so that DC voltage source 2 supplies narrow voltage-range auxiliary device 24 with electric power with a small loss in electric power at rectifier 31.

In a case where electricity storage device 8 stores a sufficient amount of electric power after engine start-up, electricity storage device 8 may supply the auxiliary device with electric power; in the meantime, generator 30 may be brought into a temporary rest.

In the operation above, the charged voltage of electricity storage device 8 is in a low level because of discharging for voltage compensation for narrow voltage-range auxiliary device 24. After that, i.e., when the normal operating conditions come back, or in the regenerating process, electricity storage device 8 becomes recharged to a predetermined value by bidirectional DC/DC converter 26. Electricity storage device 8 has a similar voltage decrease by high voltage auxiliary device 22 other than the starter. In this case, too, electricity storage device 8 undergoes a similar recharging operation.

Repeating the procedure above allows narrow voltage-range auxiliary device 24 to have stabilized voltage, even if high voltage auxiliary device 22 continually consumes a large current.

Vehicle-side ECU 33 effects ON/OFF control of switch element 32 as follows:
- Switch element 32 maintains OFF when bidirectional DC/DC converter 26 allows electricity storage device 8 to supply narrow voltage-range auxiliary device 24 with electric power and high voltage auxiliary device 22 as a large-current consumer is in operation;
- Switch element 32 maintains ON when electricity storage device 8 is put on charge in the regeneration period or when DC voltage source 2 supplies narrow voltage-range auxiliary device 24 with electric power.

As is in the second embodiment, switch element 32 may be maintained ON when bidirectional DC/DC converter 26 allows electricity storage device 8 to supply narrow voltage-range auxiliary device 24 with electric power and high voltage auxiliary device 22 is not operating. This allows the electric power fed from first input/output terminal 26a to be supplied not only to narrow voltage-range auxiliary device 24 but also to DC voltage source 2. That is, the electric power, which is stored in electricity storage device 8 by the regeneration process, is also used for charging DC voltage source 2.

As described above, the structure of the embodiment provides a power supply device capable of voltage compensation, with a high-speed response, for narrow voltage-range auxiliary device 24; at the same time, capable of reducing power loss caused by the current flown into rectifier 31.

Although the description of the embodiment is given on a vehicle having both functions of stop-idling and regenerating, it is not limited thereto. The structure of the embodiment is applicable with the same advantages to a vehicle having one of the functions above.

### INDUSTRIAL APPLICABILITY

Under a low-voltage condition of the DC voltage source, the power supply device of the present invention compensates for the voltage drop so as to supply an auxiliary device with stabilized voltage. It is therefore effectively employed for a power supply device for a vehicle with the stop-idling function that consumes a large current.

## Claims

1. A power supply device comprising:
a DC voltage source;
a first auxiliary device connected in parallel to the DC voltage source;
a first rectifier connected to the DC voltage source;
a second auxiliary device that receives electric power via the first rectifier;
a first DC/DC converter that uses the DC voltage source as input source;
an electricity storage device connected to an output terminal of the first DC/DC converter; and
a second DC/DC converter that uses the electricity storage device as input source, the second DC/DC converter whose output terminal is connected to the first rectifier.

2. The power supply device of claim 1, wherein when the DC voltage source has output voltage higher than a predetermined value, electric power is fed from the DC voltage source to the second auxiliary device and the electricity storage device is put on charge by the first DC/DC converter, when the DC voltage source has output voltage lower than the predetermined value or when an external signal is received, the second DC/DC converter starts to operate so as to prevent decrease in voltage to be applied to the second auxiliary device.

3. The power supply device of claim 1, wherein the first DC/DC converter maintains a state of not working except for charging the electricity storage device.

4. The power supply device of claim 1, wherein the second DC/DC converter constitutes a step-down circuit.

5. The power supply device of claim 1, wherein the second DC/DC converter constitutes a step-down synchronous rectification circuit.

6. The power supply device of claim 1, wherein the second DC/DC controls voltage to be applied to the second auxiliary device.

7. The power supply device of claim 1, wherein input of a linear regulator is connected to input of the second DC/DC converter and output of the linear regulator is connected to output of the second DC/DC converter.

8. The power supply device of claim 7, wherein the linear regulator has output voltage lower than output voltage of second DC/DC converter.

9. The power supply device of claim 1, wherein a second rectifier is connected at an input terminal of the first DC/DC converter.

10. The power supply device of claim 9, wherein a switch element is connected in parallel to the second rectifier, and the switch element maintains ON at least during charging operation on the electricity storage device by the first DC/DC converter.

11. A power supply device comprising:
a DC voltage source;
a wide voltage-range auxiliary device connected in parallel to the DC voltage source;
a parallel circuit, which is formed of an electricity storage device and a first rectifier, connected in series to the DC voltage source;
a high voltage auxiliary device that is connected in parallel to an in-series circuit of the DC voltage source and the electricity storage device and requires voltage higher than voltage of the DC voltage source;
a second rectifier connected to the DC voltage source;
a narrow voltage-range auxiliary device connected in parallel to the DC voltage source via the second rectifier; and
a bidirectional DC/DC converter of which a first input/output terminal is connected to the narrow voltage-range auxiliary device and a second input/output terminal is connected to the parallel circuit of the electricity storage device and the first rectifier.

12. The power supply device of claim 11, wherein the bidirectional DC/DC converter puts the electricity storage device on charge; a total amount of voltage of the DC voltage source and voltage of the electricity storage device is applied to the high voltage auxiliary device; when the DC voltage source has a voltage drop caused by a large-current flown into the high voltage auxiliary device, the bidirectional DC/DC converter operates in a direction having the electricity storage device as input and the narrow voltage-range auxiliary device as output so as to compensate for decrease in voltage to be applied to the narrow voltage-range auxiliary device.

13. The power supply device of claim 11, wherein the bidirectional DC/DC converter is an isolated bidirectional DC/DC converter.

14. The power supply device of claim 11, wherein the bidirectional DC/DC converter outputs voltage of the electricity storage device in an engine-stop period so as to control the voltage to be higher than voltage of the DC voltage source, allowing the electricity storage device to supply the narrow voltage-range auxiliary device with dark current on a continual basis.

15. The power supply device of claim 11, wherein a switch element is connected in parallel to the second rectifier, and the switch element maintains OFF when the bidirectional DC/DC converter allows the electricity storage device to supply the narrow voltage-range auxiliary device with electric power and the high voltage auxiliary device is in operation.

16. The power supply device of claim 15, wherein the switch element maintains ON when the bidirectional DC/DC converter is charging the electricity storage device.

17. The power supply device of claim 15, wherein the switch element maintains ON when the bidirectional DC/DC converter allows the electricity storage device to supply the narrow voltage-range auxiliary device with electric power and the high voltage auxiliary device is not in operation.

18. A power supply device comprising:
a DC power source;
a high voltage auxiliary device connected in parallel to the DC voltage source;
a generator connected in parallel to the DC voltage source;
a wide voltage-range auxiliary device connected in parallel to the DC voltage source;
a parallel circuit, which is formed of a rectifier and a switch element, connected in series to the DC voltage source;
a narrow voltage-range auxiliary device connected at an other end of the parallel circuit of the rectifier and the switch element;
a bidirectional DC/DC converter of which a first input/output terminal is connected to the narrow voltage-range auxiliary device; and
an electricity storage device connected to a second input/output terminal of the bidirectional DC/DC converter.

19. The power supply device of claim 18, wherein the switch element maintains OFF when the bidirectional DC/DC converter allows the electricity storage device to supply the narrow voltage-range auxiliary device with electric power and the high voltage auxiliary device is in operation.

20. The power supply device of claim 19, wherein the switch element maintains ON when the bidirectional DC/DC converter is charging the electricity storage device.

21. The power supply device of claim 19, wherein the switch element maintains ON when the bidirectional DC/DC converter allows the electricity storage device to supply the narrow voltage-range auxiliary device with electric power and the high voltage auxiliary device is not in operation.
